# EUROPEAN PATENT SPECIFICATION

(11) **EP 2 170 016 B1**
(45) Date of publication and mention of the grant of the patent: **31.10.2018**
(21) Application number: 09011786.2
(22) Date of filing: 16.09.2009
(51) Int. Cl.: H05B 37/02

(54) **Light source switching control system of lighting device for vehicle**
Lichtquellenumschaltsteuerungssystem von Fahrzeugbeleuchtungsvorrichtungen
Système de contrôle de commutation de source lumineuse du dispositif d'éclairage d'un véhicule

(30) Priority: 17.09.2008 JP 2008238142
(43) Date of publication of application: 31.03.2010
(73) Proprietor: Koito Manufacturing Co., Ltd., Tokyo 108-8711 (JP)
(72) Inventor: Murakami, Kentarou, Shizuoka (JP); Ito, Masayasu, Shizuoka (JP)
(74) Representative: Hoffmann Eitle

(56) References cited:
- WO-A1-98/46051
- DE-A1-102008 008 836
- US-A- 5 666 028
- US-A- 6 005 348
- US-A1- 2003 139 862
- US-A1- 2006 055 244
- US-B1- 7 106 036

## Description

### TECHNICAL FIELD

The present disclosure relates to a light source switching (lighting/light-out) control system of a lighting device for a vehicle and more particularly to a lighting/light-out control system of a lighting device for a vehicle which includes a light source unit having a semiconductor light source and a control unit for controlling the light source unit.

### RELATED ART

In general, a lighting/light-out control system of a lighting device for a vehicle is constituted to include a plurality of light source units having semiconductor light sources respectively, and a control unit connected to the light source units through feeding lines respectively.

The control unit has a plurality of switching portions connected in series to the light source units. The switching portions serve to control the semiconductor light sources respectively. The control unit also includes, a plurality of switching driving portions for turning ON/OFF the switching portions respectively, and a control portion for transmitting a switch control signal upon receipt of a lighting/light-out control signal, thereby controlling each of the switch driving portions. A control power generating circuit for generating and supplying a source voltage to the control portion is connected to a front stage of the switch portion (for example, see Japanese Publication JP-A-2006-73400). A battery power supply is connected to the front stage of the control power generating circuit.

When a battery voltage supplied from the battery power supply is applied (supplied), the control power generating circuit supplies a controlling source voltage to the control portion. The control portion starts a driving operation and transmits a switch control signal for controlling each switch driving portion upon receipt of a lighting/light-out control signal for giving an instruction for turning ON/OFF each semiconductor light source.

When the battery voltage is supplied, there is started a processing of a lighting/light-out program for a lighting/light-out control to be carried out by the control portion over each semiconductor light source after a passage of several tens of milliseconds after the supply. A delay of several tens of milliseconds is caused by a time taken for power-ON reset which is carried out in the control power generating circuit and the control portion or a time taken for an initialization in the control portion. The time taken for the power-ON reset or the time taken for the initialization in the control portion is needed for the driving operation of the control portion.

In a lighting/light-out control system having a circuit structure in which a switch driving portion turns ON a switching portion within the delay time, for example, a structure in which a circuit for forcibly supplying a battery voltage is disposed between a control portion and the switch driving portion. For example, in a case in which a turn signal lamp is to be brought into a lighting state to maintain a low beam amplifier into a light-out state, the switch driving portion turns ON the switch portion within the delay time so that the low beam lamp is turned ON.

In this case, therefore, the low beam lamp is once turned ON immediately after the supply of the battery voltage and is then turned OFF in accordance with the program processing of the control portion. Thus, the semiconductor light source to originally continue (maintain) the light-out state is brought into the lighting state from a stoppage of the driving operation of the control portion to a start of the driving operation. For this reason, there is a problem in that a safety of an operation of a vehicle is decreased.

In the case in which the program processing is not appropriately carried out so that an abnormality occurs in the control portion, moreover, the driving operation of the control portion is once stopped and is then started after a passage of a predetermined time. In the case in which the abnormality occurs in the control portion when the semiconductor light source is set into the lighting state, accordingly, the semiconductor light source is brought into the light-out state while the driving operation of the control portion is stopped and the control portion is then recovered into a normal state, and the driving operation is thereafter started. Thus, the semiconductor light source to originally continue the lighting state is temporarily brought into the light-out state. For this reason, there is a problem in that the safety in the operation of the vehicle is decreased.

DE 10 2008 008836 A1 shows a light emission wherein a driving operation is stopped when the PWM signal is changed from a high to a low level and switching elements simultaneously change from ON to OFF. Moreover, DE 10 2008 008836 A1 shows a transistor Q3 that is connected in series with the light source. During a stop period of (voltage) supply to the light source, the transistor Q3 is compulsory put in an OFF state. Moreover, during that stop period, also the transistor Q2 is turned OFF such that electrical charges are accumulated in capacitors C4 and C5 and thus a delay of a control means at re-lighting start is present.

US 6 005 348 A, relates to a circuit that keeps daytime head lamps ON after engine and head lamp switch are tuned OFF, and suggests a circuit with a twilight delay apparatus to prevent a complete dark state by lighting a daytime running light, e.g. for several minutes. In particular, US 6 005 348 A discloses a circuit, wherein, when the parking switch is turned ON, a transistor Q2 is turned OFF to turn OFF the daytime running light, whereas the twilight delay unit 16 is operable. Specifically, while the transistor Q2 is turned OFF the twilight delay unit 16 is actuated and the transistor is turned ON, so that the daytime running light is lit again for a timer set time.

### SUMMARY

Therefore, it is an object of the invention to maintain a lighting/light-out state before a stoppage of a driving operation of a control portion, thereby enhancing safety in an operation of a vehicle from the stoppage of the driving operation to a start of the driving operation.

A lighting/light-out control system of a lighting device for a vehicle, according to an illustrative aspect of the invention, comprises all features of independent claim 1.

Accordingly, the ON/OFF state of each switch portion is controlled to continue the lighting state or the light-out state before the stoppage of the driving operation of the control portion in a state in which the driving operation is stopped.

Accordingly, the lighting state or the light-out state before the stoppage of the driving operation can be continuously maintained in the state in which the driving operation of the control portion is stopped. Therefore, it is possible to enhance the safety of the operation of a vehicle.

In the lighting/light-out control system of a lighting device for a vehicle, the lighting/light-out maintaining circuit controls to maintain light-out of each of the semiconductor light sources while a source voltage is supplied to the control unit and the switch control signal is then transmitted to each of the switch driving portions. Therefore, in the state in which the control portion is stopped during a passage of an initializing time which is needed for the driving operation of the control portion after the supply of the source voltage to the control unit, the switch portion is maintained in the OFF state so that each light source unit can be maintained in the light-out state.

In the lighting/light-out control system of a lighting device for a vehicle, the lighting/light-out maintaining circuit controls to maintain each of the semiconductor light sources into a state brought immediately before the stoppage of the driving operation of the control portion while the driving operation of the control portion is stopped and the switch control signal is then transmitted to each of the switch driving portions when the driving operation of the control portion is stopped due to an abnormality. Therefore, in the case in which an abnormality occurs in the control portion when the semiconductor light source is set into the lighting state, for example, the light-out state of the semiconductor light source can be maintained continuously.

In the lighting/light-out control system of a lighting device for a vehicle, the predetermined time for the maintenance of the lighting/light-out maintaining circuit is equal to or longer than a time for stopping the driving operation of the control portion and then transmitting the switching control signal to each of the switch driving portions. Therefore, after the driving operation of the control portion is stopped, it is possible to continuously maintain the state brought immediately before the stoppage of the semiconductor light source.

In the lighting/light-out control system of a lighting device for a vehicle, the lighting/light-out maintaining circuit is a time constant circuit including a capacitor and a resistor. Therefore, a time for maintaining the state brought immediately before the stoppage of the driving operation of the control portion by the lighting/light-out maintaining circuit can be set by regulating a time constant based on the resistor and the capacitor.

### BRIEF DESCRIPTION OF THE DRAWINGS

Fig. 1 is a diagram showing a structure of the lighting/light-out control system of a lighting device for a vehicle according to the first exemplary embodiment of the invention.
Fig. 2 is a diagram showing a structure of a switch driving portion of the lighting/light-out control system according to the first exemplary embodiment.
Fig. 3A is a timing diagram for explaining the operation of the lighting/light-out control system according to a first example.
Fig. 3B is a timing diagram for explaining an operation of the lighting/light-out control system according to a second example.
Fig. 4 is a diagram showing a structure of a switch driving portion 7A of the lighting/light-out control system according to the further example.
Fig. 5A is a timing diagram for explaining the operation of the lighting/light-out control system according to a first example.
Fig. 5B is a timing diagram for explaining an operation of the lighting/light-out control system according to a second example.

### DETAILED DESCRIPTION

### [First Exemplary Embodiment]

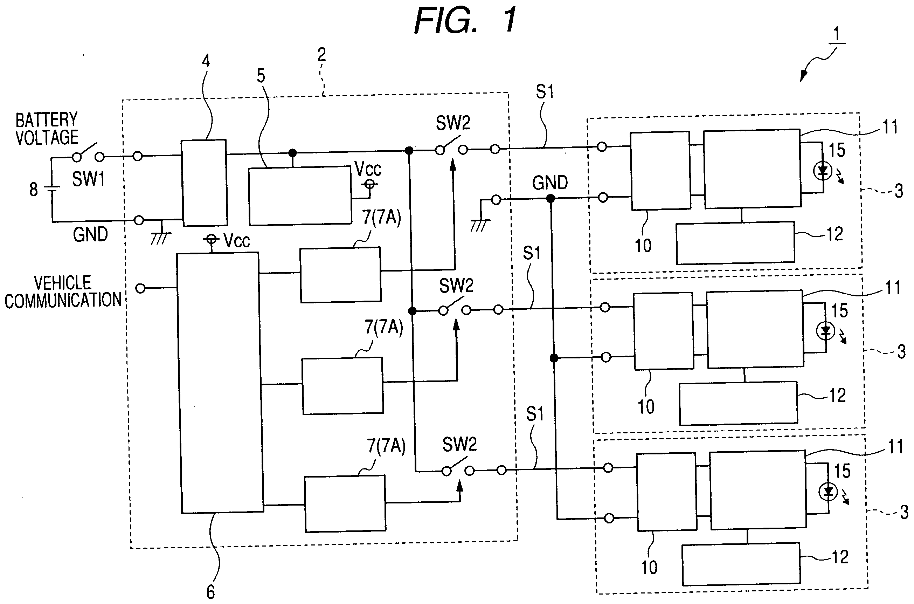

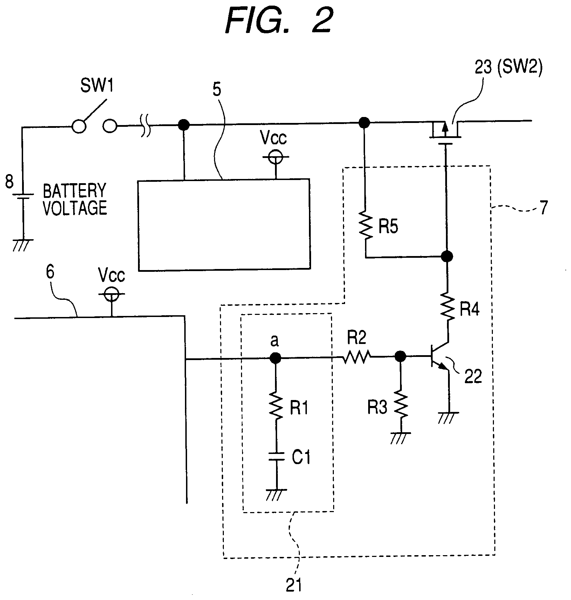

A lighting/light-out control system of a lighting device for a vehicle according to a first exemplary embodiment of the invention will be described below. Fig. 1 is a diagram showing a structure of the lighting/light-out control system of a lighting device for a vehicle according to the first exemplary embodiment of the invention. Fig. 2 is a diagram showing a structure of a switch driving portion of the lighting/light-out control system according to the first exemplary embodiment.

A lighting/light-out control system 1 includes a control unit 2 and three light source units 3, 3 and 3, for example. The control unit 2 is connected to the light source units 3, 3 and 3 through respective feeding lines S1. The control unit 2 includes an input circuit 4 connected to a battery power supply 8 through a switch portion SW1, a control power generating circuit 5 disposed in a rear stage of the input circuit 4, a CPU (Central Processing Unit) 6 serving as a control portion having an input terminal for inputting a lighting/light-out control signal, switch portions SW2, SW2 and SW2 connected to the light source units 3, 3 and 3 respectively, and switch driving portions 7, 7 and 7 disposed in a front stage of the switch portions SW2, SW2 and SW2 and a rear stage of the CPU 6 respectively.

The input circuit 4 includes a noise filter and a surge protecting unit (a surge absorber / power zener such as a damping surge).

The control power generating circuit 5 generates a controlling source voltage Vcc upon receipt of a battery voltage and supplies a power to the CPU 6.

The switch driving portions 7, 7 and 7 each have the same structures and include lighting/light-out maintaining circuits 21, 21 and 21 and NPN transistors 22, 22 and 22 respectively as shown in Fig. 2. The lighting/light-out maintaining circuit 21 has a structure in which a resistor R1 and a capacitor C1 are connected in series between a node "a" and a GND (ground). The NPN transistor 22 has a base connected to the lighting/light-out maintaining circuit 21 through a resistor R2.

For example, PMOS transistors 23, 23 and 23 are used for the switch portions SW2, SW2 and SW2, respectively (see Fig. 2). A gate of the PMOS transistor 23 is connected to a collector of the NPN transistor 22 through a resistor R4.

The light source units 3, 3 and 3 each include resonance circuits (noise filters) 10, 10 and 10, switching regulators 11, 11 and 11 serving as current control portions, control circuits 12, 12 and 12, and LEDs 15, 15 and 15 serving as semiconductor light sources, respectively.

An operation of the lighting/light-out control system according to the first exemplary embodiment will be described below.

The operation of the lighting/light-out control system according to the first exemplary embodiment includes a first example in which the CPU 6 carries out a lighting/light-out control to continuously maintain a light-out state of the LED 15 for a predetermined time in a supply of a battery voltage and a second example in which the CPU 6 carries out the lighting/light-out control to continuously maintain the lighting or light-out state of the LED 15 for a predetermined time.

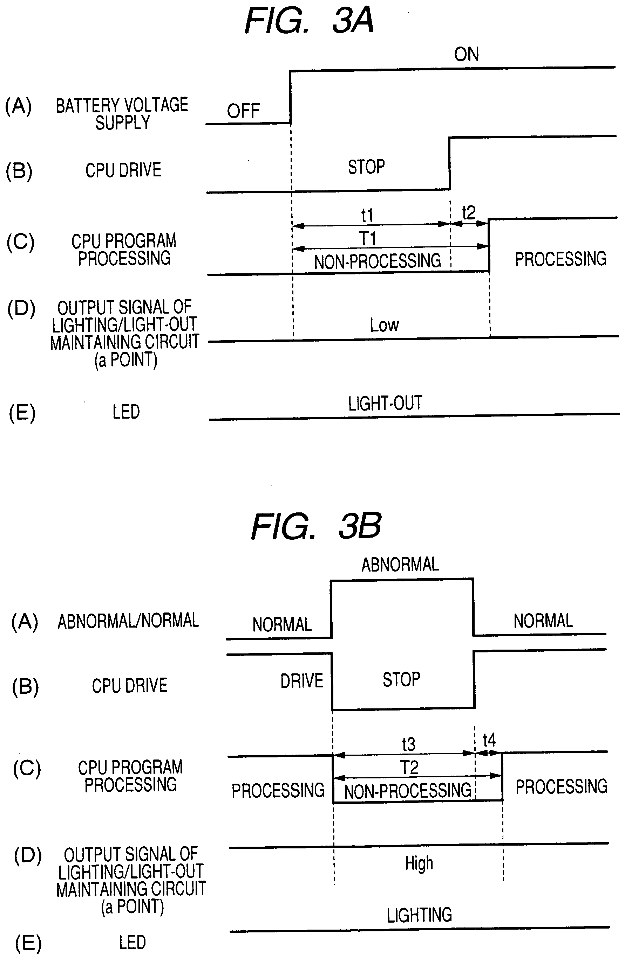

The first example will be described below. Fig. 3A is a diagram for explaining the operation of the lighting/light-out control system according to the first example.

In a state in which the battery voltage is not supplied, a light-out control signal for giving an instruction for turning OFF the LED 15 is transmitted to the CPU 6. In a state in which the battery voltage is not supplied, accordingly, the CPU 6 is maintained in a stopping state ((B) in Fig. 3A) and the CPU program processing has not been started yet ((C) in Fig. 3A). At this time, a signal output from the lighting/light-out maintaining circuit 21 has a low (Low) level ((D) in Fig. 3A). In this case, the NPN transistor 22 is set into an OFF state and the PMOS transistor 23 is also set into the OFF state. At this time, the LED 15 is set into the light-out state ((E) in Fig. 3A).

When the battery voltage is supplied ((A) in Fig. 3A), the controlling source voltage Vcc is supplied from the control power generating circuit 5 to the CPU 6. When the controlling source voltage Vcc is supplied to the CPU 6, the driving operation of the CPU 6 is started after a passage of a first time t1 from the supply of the controlling source voltage Vcc to a power-ON reset of the CPU 6 ((B) in Fig. 3A). Furthermore, the lighting/light-out program processing of the CPU 6 is started after a passage of a second time t2 for the initialization of the CPU 6 ((C) in Fig. 3A).

A time T1 in Fig. 3A is obtained by adding the power-ON reset time (the first time t1) to the initializing time (the second time t2) and is the time from the supply of the battery voltage to the CPU 6 to the transmission of the switch control signal to the switch driving portion 7. Even if the battery voltage is supplied, a signal output from the lighting/light-out maintaining circuit 21 ("a" point) is maintained to have the low level until the switch control signal is output from the CPU 6.

As described above, when the low level signal is transmitted from the lighting/light-out maintaining circuit 21 to the NPN transistor 22, the OFF state of the NPN transistor 22 is continuously maintained. For this reason, the OFF state of the PMOS transistor 23 is continuously maintained. Therefore, the light-out state of the LED 15 is continuously maintained ((E) in Fig. 3A). When the program processing of the CPU 6 is started after a passage of the time T1, the output of the CPU 6 has priority over the output of the lighting/light-out maintaining circuit 21 ((E) in Fig. 3A).

Next, the second example will be described. Fig. 3B is a diagram for explaining an operation of the lighting/light-out control system according to the second example.

The CPU 6 is set into a driving state while it is normally operated ((B) in Fig. 3B), and the lighting/light-out program processing of the CPU 6 is started ((C) in Fig. 3B). At this time, the signal output from the lighting/light-out maintaining circuit 21 has a high (High) level ((D) in Fig. 3B). In this case, the NPN transistor 22 is set into the ON state and the PMOS transistor 23 is also set into the ON state. At this time, the LED 15 is set into the lighting state ((E) in Fig. 3B).

In the case in which an abnormality then occurs in the CPU 6 ((A) in Fig. 3B), the control power generating circuit 5 stops the supply of the controlling source voltage Vcc to the CPU 6 so that the driving operation of the CPU 6 is stopped ((B) in Fig. 3B). When the CPU 6 is thereafter recovered from the abnormal state to the normal state, the driving operation of the CPU 6 is started ((B) in Fig. 3B).

In the lighting/light-out program processing of the CPU 6, a non-processing state is brought for a time (a first time t3) from the stopping state of the CPU 6 to the driving state thereof and is further maintained continuously until a time (a second time t4) for the initialization of the CPU 6 after the first time t3 passes ((C) in Fig. 3B). The battery voltage is always supplied to the control power generating circuit 5 for the first time t3 according to the second example. Therefore, a state of the power-ON reset is no different from the first example.

A time T2 in Fig. 3B is obtained by adding the first time t3 to the second time t4 and is a time until the CPU 6 is brought into the stopping state and the program processing of the CPU 6 is then started, and the switch control signal is thereafter transmitted. A time constant based on the resistor R1 and the capacitor C1 in the lighting/light-out maintaining circuit 21 is set to be equal to or greater than the time T2. In other words, when the program processing of the CPU 6 is started, the output of the CPU 6 has priority over the output of the lighting/light-out maintaining circuit 21.

When the CPU 6 is brought from the driving state into the stopping state, the high level signal input as the switch control signal is exactly held for the signal output from the lighting/light-out maintaining circuit 21 during a passage of the time T2, and is then transmitted to the NPN transistor 22 ((D) in Fig. 3B). Accordingly, the lighting/light-out maintaining circuit 21 functions as a time constant circuit for delaying, by the time T2, the input signal in the driving state brought before the driving operation of the CPU 6 is set into the stopping state and outputting the delayed signal.

As described above, when the high level signal is transmitted from the lighting/light-out maintaining circuit 21 to the NPN transistor 22 ((D) in Fig. 3B), the ON state of the NPN transistor 22 is continuously maintained. For this reason, the ON state of the PMOS transistor 23 is continuously maintained. Accordingly, the lighting state of the LED 15 is continuously maintained ((E) in Fig. 3B). To the contrary, if the LED 15 is set into the light-out state before an abnormality occurs, the light-out state is continuously maintained.

### Further Example

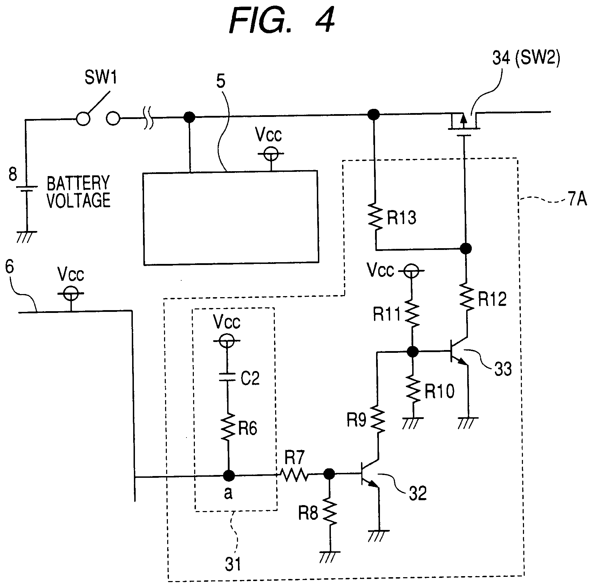

A lighting/light-out control system of a lighting device for a vehicle according to a further example will be described below. The further example is different from the first exemplary embodiment in respect of only a circuit structure of a switch driving portion. In the following description of the second exemplary embodiment, therefore, the same portions as those in the first exemplary embodiment will be briefly explained. Fig. 4 is a diagram showing a structure of a switch driving portion 7A of the lighting/light-out control system according to further example.

The switch driving portions 7A, 7A and 7A have the same structures and include lighting/light-out maintaining circuits 31, 31 and 31, NPN transistors 32, 32 and 32, and NPN transistors 33, 33 and 33 respectively as shown in Fig. 4. The lighting/light-out maintaining circuit 31 has a structure in which a resistor R6 and a capacitor C2 are connected in series between a node "a" and a DC power supply Vcc. The NPN transistor 32 has a base connected to the lighting/light-out maintaining circuit 31 through a resistor R7. The NPN transistor 32 has a collector connected to a base of the NPN transistor 33.

For example, PMOS transistors 34, 34 and 34 are used for the switch portions SW2, SW2 and SW2, respectively. A gate of the PMOS transistor 34 is connected to a collector of the NPN transistor 33 through a resistor R12.

An operation of the lighting/light-out control system according to the further example will be described below. The operation of the lighting/light-out control system according to the further example includes a first example in which a CPU 6 carries out a lighting/light-out control to continuously maintain a light-out state of an LED 15 for a predetermined time in a supply of a battery voltage, and a second example in which the CPU 6 carries out the lighting/light-out control to continuously maintain the lighting state or the light-out state of the LED 15 for a predetermined time.

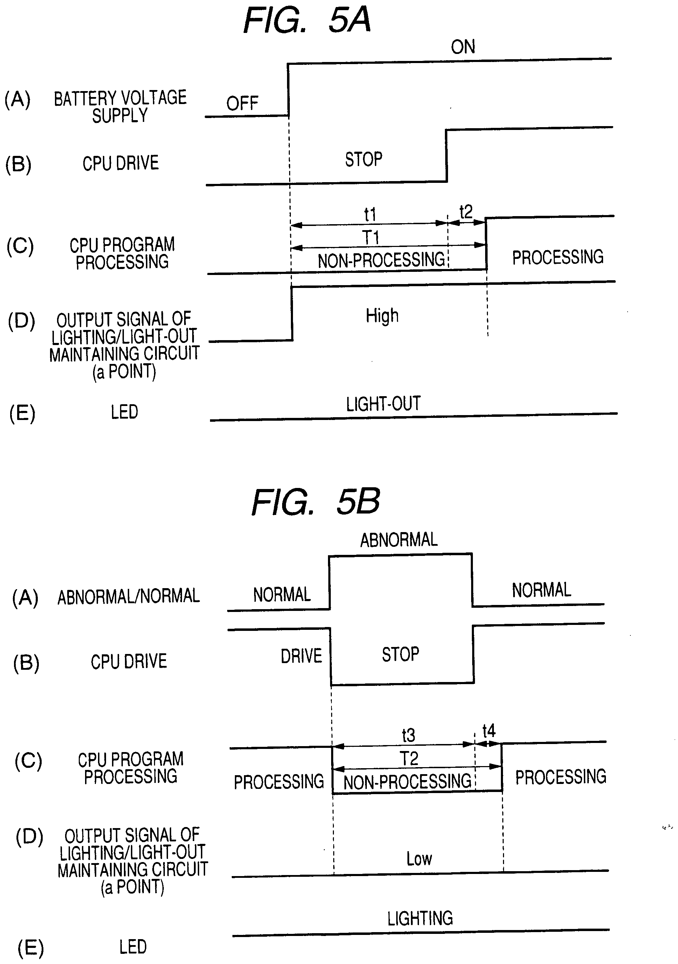

The first example will be described below. Fig. 5A is a diagram for explaining the operation of the lighting/light-out control system according to the first example.

In a state in which the battery voltage is not supplied, a light-out control signal for giving an instruction for turning OFF the LED 15 is transmitted to the CPU 6. In a state in which the battery voltage is not supplied, accordingly, the CPU 6 is maintained in a stopping state ((B) in Fig. 5A) and the CPU program processing has not been started yet ((C) in Fig. 5A). At this time, a signal output from the lighting/light-out maintaining circuit 31 has a low (Low) level ((D) in Fig. 5A). In this case, the NPN transistors 32 and 33 are set into an OFF state and the PMOS transistor 34 is also set into the OFF state. At this time, the LED 15 is set into the light-out state ((E) in Fig. 5A).

When the battery voltage is supplied ((A) in Fig. 5A), the controlling source voltage Vcc is supplied from a control power generating circuit 5 to the CPU 6 and the lighting/light-out maintaining circuit 31. When the controlling source voltage Vcc is supplied to the lighting/light-out maintaining circuit 31, the driving operation of the CPU 6 is started after a passage of a first time t1 from the supply of the controlling source voltage Vcc to a power-ON reset of the CPU 6 ((B) in Fig. 5A). Furthermore, the lighting/light-out program processing of the CPU 6 is started after a passage of a second time t2 for the initialization of the CPU 6 ((C) in Fig. 5A).

A time T1 in Fig. 5A is obtained by adding the first time t1 to the second time t2 in the same manner as in the first example of the first exemplary embodiment, and is a time from the supply of the battery voltage to the CPU 6 to the transmission of the switch control signal to the switch driving portion 7A. A time constant based on the resistor R6 and the capacitor C2 in the lighting/light-out maintaining circuit 31 is set to be equal to or greater than the time T1.

As described above, when the battery voltage is supplied, the signal output from the lighting/light-out maintaining circuit 31 is changed from the low level signal into the high level signal, and the high level signal is exactly held and is transmitted to the NPN transistor 32 till a passage of the time T1. Accordingly, the signal output from the lighting/light-out maintaining circuit 31 (the output signal on the node "a" point) is set to be the high level signal because the controlling source voltage Vcc is supplied to the lighting/light-out maintaining circuit 31 synchronously with the battery voltage during the passage of the time T1, and the lighting/light-out maintaining circuit 31 functions as a time constant circuit for delaying the high level signal by the time T1 and outputting the delayed signal.

As described above, when the high level signal is transmitted from the lighting/light-out maintaining circuit 31 to the NPN transistor 32, the ON state of the NPN transistor 32 is continuously maintained. The low level signal is input to the base of the NPN transistor 33 so that the NPN transistor 33 is brought into the OFF state. For this reason, the OFF state of the PMOS transistor 34 is continuously maintained. Therefore, the light-out state of the LED 15 is continuously maintained ((E) in Fig. 5A). When the program processing of the CPU 6 is started after a passage of the time T1, the output of the CPU 6 has priority over the output of the lighting/light-out maintaining circuit 31 ((E) in Fig. 5A).

Next, the second example will be described. Fig. 5B is a diagram for explaining an operation of the lighting/light-out control system according to the second example.

The CPU 6 is set into a driving state while it is normally operated ((B) in Fig. 5B), and the CPU program processing is started ((C) in Fig. 5B). At this time, the signal output from the lighting/light-out maintaining circuit 31 has a low level ((D) in Fig. 5B). In this case, the NPN transistor 32 is set into the OFF state, the NPN transistor 33 is set into the ON state, and the PMOS transistor 34 is also set into the ON state. At this time, the LED 15 is set into the lighting state ((E) in Fig. 5B).

In the case in which an abnormality then occurs in the CPU 6 ((A) in Fig. 5B), the control power generating circuit 5 stops the supply of the controlling source voltage Vcc to the CPU 6 so that the driving operation of the CPU 6 is stopped ((B) in Fig. 5B). When the CPU 6 is thereafter recovered from the abnormal state to the normal state, the driving operation of the CPU 6 is started ((B) in Fig. 5B).

In the lighting/light-out program processing of the CPU 6, a non-processing state is brought for a time (a first time t3) from the stopping state of the CPU 6 to the driving state thereof and is further maintained continuously until a time (a second time t4) for the initialization of the CPU 6 after a passage of the first time t3 passes ((C) in Fig. 5B). The battery voltage is always supplied to the control power generating circuit 5 for the first time t3 according to the second example. Therefore, a state of the power-ON reset is brought differently from the first example.

A time T2 in Fig. 5B is obtained by adding the first time t3 to the second time t4 and is a time until the CPU 6 is brought into the stopping state and the program processing of the CPU 6 is then started, and the switch control signal is thereafter transmitted. A time constant based on the resistor R6 and the capacitor C2 in the lighting/light-out maintaining circuit 31 is set to be equal to or greater than the time T2. In other words, when the program processing of the CPU 6 is started, the output of the CPU 6 has priority over the output of the lighting/light-out maintaining circuit 31.

When the CPU 6 is brought from the driving state into the stopping state, the low level signal input as the switch control signal is exactly held for the signal output from the lighting/light-out maintaining circuit 31 during a passage of the time T2, and is transmitted to the NPN transistor 32 ((D) in Fig. 5B). Accordingly, the lighting/light-out maintaining circuit 31 functions as a time constant circuit for delaying, by the time T2, the input signal in the driving state brought before the driving operation of the CPU 6 is set into the stopping state and outputting the delayed signal.

As described above, when the low level signal is transmitted from the lighting/light-out maintaining circuit 31 to the NPN transistor 32 ((D) in Fig. 5B), the OFF state of the NPN transistor 32 is continuously maintained and the ON state of the NPN transistor 33 is continuously maintained. For this reason, the ON state of the PMOS transistor 34 is also maintained continuously. Accordingly, the lighting state of the LED 15 is continuously maintained ((E) in Fig. 5B). To the contrary, if the LED 15 is set into the light-out state before an abnormality occurs, the light-out state is maintained continuously.

## Claims

1. A lighting/light-out control system (1) of a lighting device for a vehicle, the lighting/light-out control system (1) comprising:
a plurality of semiconductor light source units (3) having a light source (15) and a switching regulator (11) serving as a current control portion, respectively; and
a control unit (2) connected to the semiconductor light source units (3);
wherein the control unit (2) includes:
a plurality of switch portions (SW2, 23, 34) connected to the semiconductor light source units (3) and serving to control the semiconductor light source units (3), respectively;
**characterized by**:
a plurality of switch driving portions (7, 7A) for turning ON/OFF the switch portions (SW2, 23, 34), respectively; and
a control portion (6) is adapted to transmit a switch control signal upon receipt of a lighting/light-out control signal to the respective switch driving portion (7, 7A) thereby controlling each of the switch driving portions (7, 7A); and
wherein each of the switch driving portions (7, 7A) comprises a lighting/light-out maintaining circuit (21, 31) each of the lighting/light-out maintaining circuits is adpated to
- maintain a first signal output level at an output of the respective switch driving portion (7, 7A) for a first predetermined time (T1) being a time from a supply of a controlling source voltage (Vcc) to the control portion (6) to a transmission of the switch control signal to the switch driving portion (7, 7A), whereby the first signal output level controls the switch portions (SW2, 23, 34), to maintain an OFF state during the first predetermined time (T1); and to
- maintain a second signal output level at the output of the respective switch driving portion (7, 7A) for a second predetermined time (T2) being a time from when the control portion (6) is brought into a stopping state until a program processing of the control portion (6) is then started, the second signal output level maintains the state of the switch portions (SW2, 23, 34) immediately before the stoppage of a driving operation of the control portion (CPU, 6),
wherein each of the lighting/light-out maintaining circuits (21, 31) is a time constant circuit including a capacitor and a resistor and wherein the time constant of each of the lighting/light-out maintaining circuit (21, 31) is greater or equal to the first and second predetermined times.

2. The lighting/light-out control system (1) of a lighting device for a vehicle according to claim 1, wherein the OFF-state of the switch portion controls a light-out state of each of the semiconductor light source units.

3. The lighting/light-out control system (1) of a lighting device for a vehicle according to claim 1, wherein when the driving operation of the control portion (6) is stopped due to an abnormality occurring in the control portion (6) in a case when the program processing is not appropriately carried out.

## Patentansprüche

1. Beleuchtungs-/Lichtausgabesteuersystem (1) einer Beleuchtungsvorrichtung für ein Fahrzeug, wobei das Beleuchtungs-/Lichtausgabesteuersystem (1) Folgendes umfasst:
eine Vielzahl von Halbleiterlichtquelleneinheiten (3), die eine Lichtquelle (15) und einen Schaltregler (11) aufweisen, die jeweils als Stromsteuerabschnitt dienen; und
eine Steuereinheit (2), die mit den Halbleiterlichtquelleneinheiten (3) verbunden ist;
wobei die Steuereinheit (2) Folgendes einschließt:
eine Vielzahl von Schalterabschnitten (SW2, 23, 34), die mit den Halbleiterlichtquelleneinheiten (3) verbunden sind und dazu dienen, die Halbleiterlichtquelleneinheiten (3) jeweils zu steuern;
charakterisiert durch:
eine Vielzahl von Schaltertreiberabschnitten (7, 7A) zum jeweiligen EIN-/AUSSchalten der Schalterabschnitte (SW2, 23, 34); und
ein Steuerabschnitt (6) angepasst ist, um ein Schaltersteuersignal bei Empfang eines Beleuchtungs-/Lichtausgabesteuersignals zu dem jeweiligen Schaltertreiberabschnitt (7, 7A) zu übertragen,
wodurch jeder der Schaltertreiberabschnitte (7, 7A) gesteuert wird; und
wobei jeder der Schaltertreiberabschnitte (7, 7A) eine Beleuchtungs-/ Lichtausgabeaufrechterhaltungsschaltung (21, 31) umfasst, wobei jede der Beleuchtungs-/Lichtausgabeaufrechterhaltungsschaltungen angepasst ist, um
- einen ersten Signalausgangspegel an einem Ausgang des jeweiligen Schaltertreiberabschnitts (7, 7A) für eine erste vorbestimmte Zeit (T1) aufrechtzuerhalten, die eine Zeit von einer Zufuhr einer Steuerquellenspannung (Vcc) zu dem Steuerabschnitt (6) zu einer Übertragung des Schaltersteuersignals zu dem Schaltertreiberabschnitt (7, 7A) ist, wobei der erste Signalausgangspegel die Schalterabschnitte (SW2, 23, 34) steuert, um während der ersten vorbestimmten Zeit (T1) einen AUS-Zustand aufrechtzuerhalten; und um
- einen zweiten Signalausgangspegel an dem Ausgang des jeweiligen Schaltertreiberabschnitts (7, 7A) für eine zweite vorbestimmte Zeit (T2) aufrechtzuerhalten, die eine Zeit ist, von der der Steuerabschnitt (6) in einen Stoppzustand gebracht wird bis eine Programmverarbeitung des Steuerabschnitts (6) dann gestartet wird, wobei der zweite Signalausgangspegel den Zustand der Schalterabschnitte (SW2, 23, 34) unmittelbar vor dem Stoppen eines Antriebsbetriebs des Steuerabschnitts (CPU, 6) aufrechterhält,
wobei jede der Beleuchtungs-/Lichtausgabeaufrechterhaltungsschaltungen (21, 31) eine Zeit-konstante Schaltung ist, die einen Kondensator und einen Widerstand einschließt, und wobei die Zeitkonstante jeder der Beleuchtungs-/ Lichtausgabeaufrechterhaltungsschaltung (21, 31) größer oder gleich der ersten und zweiten vorbestimmten Zeit ist.

2. Beleuchtungs-/Lichtausgabesteuersystem (1) einer Beleuchtungsvorrichtung für ein Fahrzeug nach Anspruch 1, wobei der AUS-Zustand des Schalterabschnitts einen Lichtausgabezustand jeder der Halbleiterlichtquelleneinheiten steuert.

3. Beleuchtungs-/Lichtausgabesteuersystem (1) einer Beleuchtungsvorrichtung für ein Fahrzeug nach Anspruch 1, wobei, wenn der Antriebsbetrieb des Steuerabschnitts (6) aufgrund einer Anomalie gestoppt wird, die in dem Steuerabschnitt (6) auftritt, in einem Fall, in dem die Programmverarbeitung nicht geeignet ausgeführt wird.

## Revendications

1. Système de commande d'éclairage/extinction (1) d'un dispositif d'éclairage pour un véhicule, le système de commande d'éclairage/extinction (1) comprenant :
une pluralité d'unités formant sources de lumière à semi-conducteurs (3) ayant une source de lumière (15) et un régulateur de commutation (11) servant respectivement de portion de commande de courant ; et
une unité de commande (2) reliée aux unités formant sources de lumière à semi-conducteurs (3) ;
dans lequel l'unité de commande (2) inclut :
une pluralité de portions formant commutateurs (SW2, 23, 34) reliées aux unités formant sources de lumière à semi-conducteurs (3) et servant respectivement à commander les unités formant sources de lumière à semi-conducteurs (3) ;
**caractérisé par** :
une pluralité de portions de pilotage de commutateur (7, 7A) pour rendre passantes/bloquantes respectivement les portions formant commutateurs (SW2, 23, 34) ; et
une portion de commande (6) est conçue pour transmettre un signal de commande de commutateur lors de la réception d'un signal de commande d'éclairage/extinction à la portion de pilotage de commutateur respective (7, 7A) commandant de ce fait chacune des portions de pilotage de commutateur (7, 7A) ; et
dans lequel chacune des portions de pilotage de commutateur (7, 7A) comprend un circuit de maintien d'éclairage/extinction (21, 31), chacun des circuits de maintien d'éclairage/extinction est conçu pour
- maintenir un premier niveau de sortie de signal à une sortie de la portion de pilotage de commutateur respective (7, 7A) pendant un premier temps prédéterminé (T1) étant un temps allant d'une alimentation d'une tension de source de commande (Vcc) à la portion de commande (6) jusqu'à une transmission du signal de commande de commutateur à la portion de pilotage de commutateur (7, 7A), de sorte que le premier niveau de sortie de signal commande les portions formant commutateurs (SW2, 23, 34) pour maintenir un état bloquant pendant le premier temps prédéterminé (T1) ; et pour
- maintenir un second niveau de sortie de signal à la sortie de la portion de pilotage de commutateur respectif (7, 7A) pendant un second temps prédéterminé (T2) étant un temps partant du moment où la portion de commande (6) est amenée dans un état d'arrêt jusqu'à ce qu'un traitement de programme de la portion de commande (6) soit ensuite démarré, le second niveau de sortie de signal maintient l'état des portions formant commutateurs (SW2, 23, 34) immédiatement avant l'interruption d'une opération de pilotage de la portion de commande (CPU, 6),
dans lequel chacun des circuits de maintien d'éclairage/extinction (21, 31) est un circuit à constante de temps incluant un condensateur et une résistance et dans lequel la constante de temps de chacun du circuit de maintien d'éclairage/extinction (21, 31) est supérieure ou égale aux premier et second temps prédéterminés.

2. Système de commande d'éclairage/extinction (1) d'un dispositif d'éclairage pour un véhicule selon la revendication 1, dans lequel l'état bloquant de la portion formant commutateur commande un état d'extinction de chacune des unités formant sources de lumière à semi-conducteurs.

3. Système de commande d'éclairage/extinction (1) d'un dispositif d'éclairage pour un véhicule selon la revendication 1, dans lequel lorsque l'opération de pilotage de la portion de commande (6) est arrêtée en raison d'une anomalie survenant dans la portion de commande (6) dans un cas où le traitement de programme n'est pas convenablement effectué.
